# EUROPÄISCHE PATENTANMELDUNG

(11) **EP 3 421 850 A1**
(43) Veröffentlichungstag der Anmeldung: **02.01.2019**
(21) Anmeldenummer: 17179066.0
(22) Anmeldetag: 30.06.2017
(51) Int. Cl.: F16K 51/02, F16K 37/00, F16K 3/18, F16K 3/10

(54) **VAKUUMVENTIL MIT POSITIONSSENSOR**

(71) Anmelder: VAT Holding AG, 9469 Haag (CH)
(72) Erfinder: Böhm, Christoph, CH-6022 Grosswangen (CH); Eschenmoser, Adrian, CH-9472 Grabs (CH); Elford, Kyle Axel, FL-9490 Vaduz (LI)
(74) Vertreter: Kaminski Harmann

(57) **Zusammenfassung**

Die Erfindung betrifft ein Vakuumventil (1) mit einem Ventilverschluss (4) und einer mit dem Ventilverschluss (4) gekoppelten Antriebseinheit (7), welche wenigstens ein Verstellelement (5) aufweist. Das Vakuumventil (1) weist weiter einen Positionssensor (10, 10') auf, insbesondere einen Weg- oder Abstandssensor, so dass eine Position des Ventilverschlusses (4) und/oder des wenigstens einen Verstellelements (5) bezogen auf eine Nullposition, insbesondere einer Offenposition (O) oder Schliessposition (G) des Vakuumventils (1), messbar ist.

## Beschreibung

Die Erfindung betrifft ein Vakuumventil mit wenigstens einem Positionssensor und ein Verfahren zur Steuerung eines Vakuumventils mit einer Positionsmessung.

Allgemein sind Vakuumventile zur Regelung eines Volumen- oder Massenstroms und/oder zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt und kommen insbesondere bei Vakuumkammersystemen im Bereich der IC-, Halbleiter- oder Substratfertigung, die in einer geschützten Atmosphäre möglichst ohne das Vorhandensein verunreinigender Partikel stattfinden muss, zum Einsatz. Derartige Vakuumkammersysteme umfassen insbesondere mindestens eine zur Aufnahme von zu bearbeitenden oder herzustellenden Halbleiterelementen oder Substraten vorgesehene, evakuierbare Vakuumkammer, die mindestens eine Vakuumkammeröffnung besitzt, durch welche die Halbleiterelemente oder anderen Substrate in die und aus der Vakuumkammer führbar sind, sowie mindestens eine Vakuumpumpe zum Evakuieren der Vakuumkammer. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozess-Vakuumkammern, in denen die innerhalb der Prozess-Vakuumkammern befindlichen Teile mittels jeweils einer Bearbeitungsvorrichtung bearbeitet werden. Sowohl während des Bearbeitungsprozesses innerhalb der Prozess-Vakuumkammern, als auch während des Transports von Kammer zu Kammer müssen sich die hochsensiblen Halbleiterelemente oder Substrate stets in geschützter Atmosphäre - insbesondere in luftleerer Umgebung - befinden.

Hierfür kommen zum einen Peripherieventile zum Öffnen und Schliessen einer Gaszu- oder -abfuhr und zum anderen Transferventile zum Öffnen und Schliessen der Transferöffnungen der Vakuumkammern für das Ein- und Ausführen der Teile zum Einsatz.

Die von Halbleiterteilen durchlaufenen Vakuumventile werden aufgrund des beschriebenen Anwendungsgebiets und der damit verbundenen Dimensionierung als Vakuum-Transferventile, aufgrund ihres mehrheitlich rechteckigen Öffnungsquerschnitts auch als Rechteckventil und aufgrund ihrer üblichen Funktionsweise auch als Schieberventil, Rechteckschieber oder Transferschieberventil bezeichnet.

Peripherieventile werden insbesondere zur Steuerung oder Regelung des Gasflusses zwischen einer Vakuumkammer und einer Vakuumpumpe oder einer weiteren Vakuumkammer eingesetzt. Peripherieventile befinden sich beispielsweise innerhalb eines Rohrsystems zwischen einer Prozess-Vakuumkammer oder einer Transferkammer und einer Vakuumpumpe, der Atmosphäre oder einer weiteren Prozess-Vakuumkammer. Der Öffnungsquerschnitt derartiger Ventile, auch Pumpenventile genannt, ist in der Regel kleiner als bei einem Vakuum-Transferventil. Da Peripherieventile abhängig vom Einsatzgebiet nicht nur zum vollständigen Öffnen und Schliessen einer Öffnung, sondern auch zum Steuern oder Regeln eines Durchflusses durch kontinuierliches Verstellen des Öffnungsquerschnitts zwischen eine vollständigen Offenstellung und einer gasdichten Geschlossenstellung eingesetzt werden, werden sie auch als Regelventile bezeichnet. Ein mögliches Peripherieventil zur Steuerung oder Regelung des Gasflusses ist das Pendelventil.

Bei einem typischen Pendelventil, wie beispielsweise aus der US 6,089,537 (Olmsted) bekannt, wird in einem ersten Schritt ein in der Regel runder Ventilteller über eine in der Regel ebenfalls runde Öffnung von einer die Öffnung freigebenden Stellung, der Offenposition, in eine die Öffnung überdeckende Zwischenstellung rotatorisch geschwenkt. Im Falle eines Schieberventils, wie beispielsweise in der US 6,416,037 (Geiser) oder der US 6,056,266 (Blecha) beschrieben, ist der Ventilteller, wie auch die Öffnung, meist rechteckig ausgebildet und wird in diesem ersten Schritt linear von einer die Öffnung freigebenden Stellung in eine die Öffnung überdeckende Zwischenstellung geschoben. In dieser Zwischenstellung befindet sich der Ventilteller des Pendel- oder Schieberventils in einer beabstandeten Gegenüberlage zu dem die Öffnung umgebenden Ventilsitz. In einem zweiten Schritt wird der Abstand zwischen dem Ventilteller und dem Ventilsitz verkleinert, so dass der Ventilteller und der Ventilsitz gleichmässig aufeinander gedrückt werden, so dass der Ventilverschluss eine Schliessposition erreicht, in der die Öffnung im Wesentlichen gasdicht verschlossen wird. Diese zweite Bewegung erfolgt vorzugsweise im Wesentlichen in eine senkrechte Richtung zum Ventilsitz.

Die jeweilige Endlage einer Verstellbewegung, also die Offenposition und die Schliessposition (und bei Vorliegen einer Verstellbewegung aus zwei zusammengesetzten Teilbewegungen in wenigstens zwei verschiedene Verstellrichtung auch die Zwischenstellung), wird dabei mit mechanischen Endlageschaltern erkannt bzw. eingehalten. Für einen exakten Verschluss sind hierbei nachteilig enge Toleranzgrenzen einzuhalten.

Die Abdichtung kann z.B. entweder über einen auf der Verschlussseite des Ventiltellers angeordneten Dichtungsring, der auf den die Öffnung umlaufenden Ventilsitz gepresst wird, erfolgen, oder über einen Dichtungsring auf dem Ventilsitz, gegen den die Verschlussseite des Ventiltellers gedrückt wird. Durch den in zwei Schritten erfolgenden Schliessvorgang wird der Abdichtring zwischen dem Ventilteller und dem Ventilsitz kaum Scherkräften, die den Abdichtring zerstören würden, unterworfen, da die Bewegung des Ventiltellers im zweiten Schritt im Wesentlichen geradlinig senkrecht auf den Ventilsitz stattfindet.

Unterschiedliche Dichtvorrichtungen sind aus dem Stand der Technik bekannt, beispielsweise aus der US 6,629,682 B2 (Duelli). Ein geeignetes Material für Dichtungsringe und Dichtungen bei Vakuumventilen ist beispielsweise Fluorkautschuk, auch FKM genannt, insbesondere das unter dem Handelsnamen "Viton" bekannte Fluorelastomer, sowie Perfluorkautschuk, kurz FFKM.

Aus dem Stand der Technik sind unterschiedliche Antriebssysteme zur Erzielung einer beim Pendelventil rotatorischen und beim Schieberventil translatorischen Bewegung des Ventiltellers parallel über die Öffnung und einer im Wesentlichen translatorischen Bewegung senkrecht auf die Öffnung bekannt, beispielsweise aus der US 6,089,537 (Olmsted) für ein Pendelventil und aus der US 6,416,037 (Geiser) für ein Schieberventil.

Das Anpressen des Ventiltellers auf den Ventilsitz muss derart erfolgen, dass sowohl die geforderte Gasdichtigkeit innerhalb des gesamten Druckbereichs sichergestellt ist, als auch eine Beschädigung des Abdichtmediums, insbesondere des Abdichtrings in Form eines O-Rings, durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers vor. Besonders bei grossen Druckschwankungen oder dem Wechsel von Unterdruck auf Überdruck, oder umgekehrt, ist eine gleichmässige Kraftverteilung entlang des gesamten Umfangs des Abdichtrings jedoch nicht immer gewährleistbar. Generell wird angestrebt, den Abdichtring von Abstützkräften, die sich aus dem an das Ventil anliegenden Druck ergeben, zu entkoppeln. In der US 6,629,682 (Duelli) wird hierzu z.B. ein Vakuumventil mit einem Abdichtmedium vorgeschlagen, das sich aus einem Abdichtring und einem danebenliegenden Abstützring zusammensetzt, so dass der Abdichtring von Abstützkräften im Wesentlichen befreit ist.

Um die geforderte Gasdichtigkeit, gegebenenfalls sowohl für Über- als auch Unterdruck, zu erreichen, sehen zusätzlich oder alternativ zum zweiten Bewegungsschritt manche bekannte Pendelventile oder Schieberventile einen senkrecht zum Ventilteller verschiebbaren, die Öffnung umgebenden Ventilring vor, der zum gasdichten Schliessen des Ventils auf den Ventilteller gedrückt wird. Derartige Ventile mit relativ zum Ventilteller aktiv verschiebbaren Ventilringen sind beispielsweise aus der DE 1 264 191 B1, der DE 34 47 008 C2, der US 3,145,969 (von Zweck) und der DE 77 31 993 U bekannt. In der US 5,577,707 (Brida) wird ein Pendelventil mit einem eine Öffnung aufweisenden Ventilgehäuse und einem parallel über die Öffnung schwenkbaren Ventilteller zum Steuern eines Durchflusses durch die Öffnung beschrieben. Ein Ventilring, der die Öffnung umschliesst, ist senkrecht in Richtung zum Ventilteller mittels mehrerer Federn und Druckluftzylinder aktiv bewegbar. Eine mögliche Weiterentwicklung dieses Pendelventils wird in der US 2005/0067603 A1 (Lucas et al.) vorgeschlagen.

Da oben genannte Ventile unter anderem bei der Herstellung hochsensibler Halbleiterelemente in einer Vakuumkammer zum Einsatz kommen, muss eine entsprechende Abdichtwirkung auch für solche Prozesskammern verlässlich gewährleistet sein. Hierfür ist insbesondere der Zustand eines Dichtmaterials oder einer bei Verpressung mit dem Dichtmaterial in Kontakt stehenden Dichtfläche von Bedeutung. Im Verlauf der Betriebsdauer eines Vakuumventils können typischerweise Abnutzungen des Dichtmaterials oder der Dichtflächen auftreten.

Weiterhin sind das Antriebssystem bzw. die sich mechanisch bewegenden Bauteile des Ventils fehleranfällig, z.B. aufgrund von Abnutzungs- oder Alterungserscheinungen oder aufgrund externer Störeinflüsse wie mechanische Schocks und dergleichen, so dass es dadurch zu Beeinträchtigungen der Abdichtwirkung oder generell der Funktion bzw. Verlässlichkeit des Vakuumventils kommen kann. Bislang gibt es im Stand der Technik keine Möglichkeit, solche Fehler frühzeitig bzw. vorab zu erkennen.

Um die Qualität des Ventils bzw. der Abdichtung auf einem konstant ausreichend hohen Niveau zu halten, erfolgt deshalb eine Wartung des Ventils typischerweise in bestimmten zeitlichen Abständen, häufig, indem Teile des Ventils, wie z.B. die Dichtung, Antriebselemente oder das Ventil als Ganzes ausgetauscht bzw. erneuert werden. Ein solcher Wartungszyklus bemisst sich dabei meist an der Anzahl der zu erwartenden Öffnungs- und Schliesszyklen in einem bestimmten Zeitraum. Die Wartung erfolgt also meist vorsorglich um das Eintreten einer Undichtigkeit oder sonstiger Fehlfunktionen vorab weitestgehend ausschliessen zu können.

Ein solches Instandhaltungserfordernis beschränkt sich nicht allein auf das Dichtmaterial oder den Ventilteller, sondern erstreckt sich z.B. ebenso auf den Ventilsitz, der einen zum Ventilteller korrespondierenden Teil des Vakuumventils bildet. Die Struktur einer Dichtfläche seitens des Ventilsitzes, z.B. einer in den Ventilsitz eingelassenen Nut, ist von einer mechanischen Beanspruchung ebenso betroffen. Daher kann auch eine aus einem Betrieb des Ventils resultiere strukturelle Veränderung der Nut eine Beeinträchtigung der Dichtung bewirken. Auch hierfür sind üblicherweise entsprechende Wartungsintervalle definiert.

Ein Nachteil dieser Ventilwartung liegt in deren vorsorglichem Charakter. Die von der Wartung betroffenen Teile werden zumeist vor Ablauf deren regulärer oder tatsächlicher Lebensdauer erneuert oder ersetzt, was einen erhöhten Kostenaufwand bedeutet. Zudem benötigt jeder derartige Wartungsschritt in der Regel eine gewisse Stillstandszeit für einen Produktionsprozess und einen erhöhnten technischen und finanziellen Aufwand. Dies bedeutet dann in Summe einen Stillstand der Produktion in Abständen, die kürzer sind als erforderlich, und häufiger als dies überhaupt notwendig wäre.

Der Erfindung liegt somit die Aufgabe zugrunde, ein verbessertes Vakuumventil bereitzustellen, welches einen optimierten Betrieb erlaubt.

Eine weitere Aufgabe der Erfindung besteht darin, ein verbessertes Vakuumventil bereitzustellen, welches eine optimierte Ventilwartung und damit eine Verbesserung, d.h. Verkürzung von allfälligen Prozessstillständen, erlaubt.

Eine weitere Aufgabe der Erfindung besteht darin, ein verbessertes Vakuumventil bereitzustellen, welches eine Verlängerung, der Lebensdauer von einzelnen Ventilteilen ermöglicht.

Eine weitere Aufgabe der Erfindung ist es ein verbessertes Vakuumventil bereitzustellen, welches weniger strenge Toleranzanforderungen an einzelne Bauteile bzw. an die Herstellung stellt.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die grundlegende Idee der vorliegenden Erfindung ist es ein Vakuumventil mit einem Positionssensor auszustatten und das Ventil und den Positionssensor dabei so auszugestalten, dass damit eine, vorzugsweise fortlaufende, Bestimmung oder Überwachung der Position wenigstens eines der mechanisch bewegten Teile des Ventils ermöglicht ist.

Gegenstand der Erfindung ist also ein Vakuumventil, vorzugsweise ein Vakuumschieberventil, Pendelventil oder Monoventil, zur Regelung eines Volumen- oder Massenstroms und/oder zum gasdichten Unterbrechen eines Fliesswegs, mit einem Ventilsitz, der eine eine Öffnungsachse definierende Ventilöffnung und eine die Ventilöffnung umlaufende erste Dichtfläche aufweist. Der Ventilsitz kann hierbei integraler oder struktureller Bestandteil des Vakuumventils sein und insbesondere einen Teil des Ventilgehäuses verkörpern. Alternativ kann der Ventilsitz durch die Öffnung einer Prozesskammer, z.B. einer Vakuumkammer, gebildet sein und unter Zusammenwirkung mit dem relativ zu dem Ventilsitz beweglichen Ventilverschluss ein Vakuumventil im Sinne der vorliegenden Erfindung bilden.

Weiter umfasst das Vakuumventil einen Ventilverschluss, insbesondere einen Ventilteller, zur Regelung des Volumen- oder Massenstroms und/oder zur Unterbrechung des Fliesswegs, mit einer zu der ersten Dichtfläche korrespondierenden zweiten Dichtfläche, deren veränderliche Lage durch eine jeweilige Position und Ausrichtung des Ventilverschlusses bestimmt ist. Zudem weist das Vakuumventil eine mit dem Ventilverschluss gekoppelten Antriebseinheit mit wenigstens einem beweglichen Verstellelement, z.B. einem Verstellarm, wobei die Antriebseinheit zum Ausführen einer Verstellbewegung ausgebildet ist, so dass der Ventilverschluss von einer Offenposition, in welcher der Ventilverschluss und der Ventilsitz relativ zueinander kontaktlos vorliegen, in eine Schliessposition, in welcher, insbesondere über eine Dichtung, ein bezogen auf die Öffnungsachse axial dichtender Kontakt zwischen der ersten Dichtfläche und der zweiten Dichtfläche besteht und die Ventilöffnung dadurch gasdicht verschlossen ist, und zurück verstellbar ist.

Insbesondere weist eine oder beide der beiden Dichtflächen eine Dichtung aus Dichtmaterial auf. Das Dichtmaterial kann z.B. ein polymerbasiertes Material (z.B. Elastomer, insbesondere Fluorelastomer) sein, das auf die Dichtfläche aufvulkanisiert ist oder als O-Ring in einer Nut in dem Ventilverschluss oder dem Ventilsitz vorliegt. Als Dichtflächen werden im Rahmen der Erfindung also vorzugsweise diejenigen Flächen betrachtet, bei denen zum Verschliessen der Ventilöffnung (Schliessposition) eine Dichtung aus Dichtmaterial verpresst vorliegt.

Die Antriebseinheit ist beispielsweise als ein Elektromotor (Schrittmotor) oder als eine Kombination von mehreren Motoren oder als pneumatischer Antrieb ausgebildet. Insbesondere stellt die Antriebseinheit eine Bewegung des Ventilverschlusses in zumindest zwei (im Wesentlichen zueinander orthogonale) Richtungen bereit.

Erfindungsgemäss weist das Vakuumventil wenigstens einen Positionssensor auf, wobei der Positionssensor derart ausgebildet und im Vakuumventilangeordnet ist, dass, vorzugsweise fortlaufend, eine Position des Ventilverschlusses und/oder des wenigstens einen Verstellelements, insbesondere ein Verstellarm, bezogen auf eine Nullposition, insbesondere der Offenposition oder Schliessposition, messbar ist.

Bei dem Positionssensor handelt es sich vorzugsweise um einen Wegsensor mit einem positionsgebenden Element. Alternativ ist der Sensor als Abstandssensor ausgebildet. Im Falle mehrerer Sensoren können auch beide Arten verwendet werden. Vorzugsweise ist der Positionssensor als absoluter Positionssensor ausgebildet, so dass Positionen ohne Anfahren der Nullstellung bestimmbar sind, z.B. mittels eines eineindeutigen Positionscodes auf einem Lineal, einer Massverkörperung oder einer Skala des Sensors.

Bevorzugt ist der Sensor derart ausgebildet und im Vakuumventil angeordnet, dass der zeitliche Verlauf wenigstens eines Teils der Verstellbewegung bestimmbar ist. Es werden also über einen bestimmten Zeitabschnitt in Folge mehrere Positionen bestimmt, beispielsweise dergestalt, dass daraus wenigstens eine Geschwindigkeit der Verstellbewegung bzw. des Verstellelements und/oder des Ventilverschlusses für zumindest diesen einen Zeitabschnitt der Verstellbewegung bestimmbar oder ableitbar ist. Darüberhinaus können weiter aus den Positionsmessungen auch Beschleunigungen bestimmt werden.

Als Option umfasst die Verstellbewegung eine zumindest im Wesentlichen lineare Bewegung und der Positionssensor ist ausgebildet und angeordnet zur Erfassung zumindest eines Teils der oder der Ganzen linearen Bewegung, wobei der Positionssensor vorzugsweise ein Linearencoder ist.

Alternativ oder zusätzlich umfasst die Verstellbewegung eine zumindest im Wesentlichen rotatorische Bewegung und der Positionssensor ist ausgebildet und angeordnet ist zur Erfassung zumindest eines Teils oder der Ganzen der rotatorischen Bewegung, wobei der Positionssensor vorzugsweise ein Winkelencoder ist.

Optional ist der Positionssensor ein induktiver, optischer, magnetischer, magnetostriktiver, potenziometrischer und/oder kapazitiver Positionssensor. Als weitere Option ist der Positionssensor ausserhalb eines durch das Vakuumventil definierten, von einer äusseren Umgebung abgetrennten Vakuumbereichs angeordnet ist. Vorteilhaft ist hierbei also, dass die Sensoranordnung beispielsweise derart ausgebildet sein kann, dass z.B. der Sensor selbst nicht in den Vakuumbereich gebracht werden muss und damit ein vergleichsweise geringer konstruktiver Aufwand gewährleistet werden kann.

In einigen Ausführungsformen ist der Positionssensor derart ausgebildet und im Vakuumventil angeordnet ist, dass mittels des einen Positionssensors eine Positionsmessung bezüglich wenigstens zweier, insbesondere zueinander im Wesentlichen orthogonaler, Verstellrichtungen durchführbar ist, also ein einziger Positionssensor Positionen bezüglich mehrerer Achsen oder Richtungen bestimmen kann. Dies erfolgt z.B. dadurch, dass ein Target des Sensors von mehreren Linealen empfangen wird, entweder sequentiell, z.B. zuerst beim Verstellen entlang der ersten Verstellrichtung und dann beim Verstellen entlang der zweiten Verstellrichtung, oder simultan, z.B. durch Ausbildung als 2D-Positionssensor. Alternativ weist das Vakuumventil wenigstens zwei Positionssensoren auf, welche derart ausgebildet und im Vakuumventil angeordnet sind, dass mittels des ersten Positionssensors eine Position bezüglich einer ersten Verstellrichtung und mittels des zweiten Positionssensors eine Position bezüglich einer zweiten Verstellrichtung messbar ist, insbesondere wobei beide Verstellrichtungen zueinander im Wesentlichen orthogonal sind

In einer Ausführungsform weist das Vakuumventil eine Kontroll- und Steuereinheit auf zur Ansteuerung der Antriebseinheit mit vordefinierten Steuerwerten zur Verstellung des Ventilverschlusses zwischen der Offenposition und der Schliessposition, wobei die Antriebseinheit, der Ventilverschluss und der Sensor derart ausgebildet sind und zusammenwirken, dass die Steuerwerte basierend auf dem Messsignal des Sensors eingestellt werden, insbesondere derart, dass das Messsignal kontinuierlich einem vordefinierten Sollwert entspricht.

Dabei sind optional das Vakuumventil, die Sensoranordnung und die Kontroll- und Steuereinheit beispielsweise derart konfiguriert, dass der Positionssensor für eine Bereitstellung und Übertragung des Messsignals beispielsweise über eine herkömmliche drahtgebundene oder kabellose Verbindung mit der Kontroll- und Steuereinheit in einseitiger oder zweiseitiger Kommunikation steht.

Das Vakuumventil kann ferner beispielsweise eine derart ausgebildete Verarbeitungseinheit aufweisen, insbesondere bereitgestellt durch die Kontroll- und Steuereinheit oder die Sensoranordnung, dass ein erfasstes Messsignal mittels der Verarbeitungseinheit verarbeitbar ist und anhand des erfassten Messsignals eine Zustandsinformation erzeugbar ist. Die erfassten Messsignale können sodann für die Bereitstellung einer bewertbaren Zustands information, beispielsweise für die Ventilregelung durch die Kontroll-und Steuereinheit oder als Benutzerinformation weiterverarbeitet und bereitgestellt werden.

Die Zustandsinformation kann beispielsweise eine Information bezüglich einer mechanischen und/oder strukturellen Integrität des Ventilverschlusses und/oder des Verstellelements bereitstellen, beispielsweise basierend auf einem Ist-Soll-Vergleich für das erfasste Positionsmesssignal, z.B. basierend auf einer erfassten und einer erwarteten Position für eine Referenz (ein) stellung der Antriebseinheit.

Ferner kann basierend auf der Zustandsinformation ein Ausgabesignal bereitgestellt werden, das eine Relation des erfassten Positionssensormesssignals zu bestimmten Toleranzwerten angibt. So kann insbesondere eine Bewertung bezüglich eines durch das Vakuumventil gesteuerten Prozesses erfolgen, beispielsweise eine Bewertung ob eine geforderte Dichtwirkung erreicht wird oder es können allfällige Beschädigungen z.B. der Verstellelemente oder Dichtflächen erkannt werden. Beispielsweise kann dann einem Benutzer durch ein visuelles oder akustisches Signal angezeigt werden, ob ein Prozess innerhalb der geforderten Toleranzen abläuft oder ein unerwünschtes Unter- oder Überschreiten einer solchen Toleranz (z.B. basierend auf der Verstellgeschwindigkeit oder Endlage) zu erwarten ist.

Die vorliegende Erfindung umfasst zudem Verfahren zur Steuerung eines Vakuumventils, insbesondere eines Vakuumschieberventils, Pendelventils oder Monoventils, wobei das Vakuumventil ausgebildet ist zur Regelung eines Volumen- oder Massenstroms und/oder zum gasdichten Unterbrechen eines Fliesswegs. Das zu steuernde Vakuumventil weist dabei einen Ventilsitz, der eine eine Öffnungsachse definierende Ventilöffnung und eine die Ventilöffnung umlaufende erste Dichtfläche, einen Ventilverschluss, insbesondere Ventilteller, zur Regelung des Volumen- oder Massenstroms und/oder zur Unterbrechung des Fliesswegs, mit einer zu der ersten Dichtfläche korrespondierenden zweiten Dichtfläche, deren veränderliche Lage durch eine jeweilige Position und Ausrichtung des Ventilverschlusses bestimmt ist, eine mit dem Ventilverschluss gekoppelte Antriebseinheit mit wenigstens einem beweglichen Verstellelement, wobei die Antriebseinheit zum Ausführen einer Verstellbewegung ausgebildet ist, so dass der Ventilverschluss von einer Offenposition, in welcher der Ventilverschluss und der Ventilsitz relativ zueinander kontaktlos vorliegen, in eine Schliessposition, in welcher, insbesondere über eine Dichtung, ein bezogen auf die Öffnungsachse axial dichtender Kontakt zwischen der ersten Dichtfläche und der zweiten Dichtfläche besteht und die Ventilöffnung dadurch gasdicht verschlossen ist, und zurück verstellbar ist, auf.

Erfindungsgemäss wird im Rahmen des Verfahrens, insbesondere fortlaufend, eine, insbesondere absolute, Position des Ventilverschlusses und/oder des wenigstens einen Verstellelements bezogen auf eine Nullposition, insbesondere der Offenposition oder Schliessposition, gemessen.

In einer Fortbildung des Verfahrens wird im Rahmen des Verfahrens basierend auf der Positionsmessung eine Zustandsinformation des Vakuumventils, insbesondere bezüglich einer mechanischen und/oder strukturellen Integrität der des Ventilverschlusses oder des Verstellelements, ermittelt, wobei vorzugsweise die Zustandsinformation mittels eines Ist-Soll-Vergleichs für das erfasste Messsignal ermittelt ist und/oder basierend auf einem Abgleich der Zustandsinformation mit vordefinierten Toleranzwerten ein Ausgabesignal bereitgestellt wird bezüglich einer Bewertung eines durch das Vakuumventil gesteuerten Prozesses.

Optional wird im Rahmen des Verfahrens basierend auf der Positionsmessung eine Verstellgeschwindigkeit des Ventilverschlusses und/oder des wenigstens einen Verstellelements wenigstens für einen Teil der Verstellbewegung und/oder die Dauer der Verstellbewegung von der Offenposition zur Schliessposition und/oder umgekehrt bestimmt. Derartige Informationen können dabei in Form eines Diagramms zur Auswertung an einen Benutzer ausgegeben werden und/oder automatisiert ausgewertet werden.

Als weitere Option erfolgt im Rahmen des Verfahrens basierend auf der Positionsmessung eine Detektion einer Endlage, insbesondere der Offenposition und/oder Schliessposition, des Ventilverschlusses und/oder des wenigstens einen Verstellelements und/oder eines allfälligen Aufpralls der Dichtflächen aufeinander im Rahmen der Verstellbewegung und/oder eines allfälligen Haftens der Dichtflächen aneinander.

Gegenstand der vorliegenden Erfindung ist weiters ein Computerprogrammprodukt mit Programmcode, der auf einem maschinenlesbaren Träger, insbesondere einer Steuer- und Verarbeitungseinheit eines erfindungsgemässen Vakuumventils, gespeichert ist, oder Computer-Daten-Signal, verkörpert durch eine elektromagnetische Welle, zur Durchführung des erfindungsgemässen Verfahrens.

Die vorliegende Erfindung stellt also vorteilhaft ein Vakuumventil bereit, welches eine fortlaufende oder kontinuierliche Positionsmessung des Ventilverschlusses und/oder von Verstellelementen erlaubt, so dass Verstellbewegungen oder -abläufe kontrolliert oder überprüft und ggf. bewertet werden können. Weiter erlaubt die Positionsmessung eine automatische und fortlaufende Zustandsverifikation des Vakuumventils bzw. einzelner seiner Bauteile, z.B. der Antriebseinheit, von Dichtungen oder von Verstellelementen, wobei nicht nur direkt Zustandsinformationen über bewegte Bauteile ermittelbar oder ableitbar sind, sondern indirekt auch über feststehende Teile. Fehler oder Unregelmässigkeiten, die auf zukünftige Fehler deuten, können dabei frühzeitig oder überhaupt erst erkannt werden und/oder unnötige Wartungen aufgrund festgestellter Fehlerfreiheit vermieden werden. Die Überprüfungen können dabei vorteilhaft während der normalen Prozessabläufe erfolgen, so dass diese nicht unterbrochen werden müssen.

Das erfindungsgemässe Vakuumventil wird nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen
- Fig. 1a,b: eine mögliche erste Ausführungsform eines erfindungsgemässen Vakuumventils als Monoventil;
- Fig. 2: eine mögliche zweite Ausführungsform eines erfindungsgemässen Vakuumventils als Monoventil;
- Fig. 3a-c: eine mögliche weitere Ausführungsform eines erfindungsgemässen Vakuumventils als Transferventil;
- Fig. 4a,b: schematische Darstellung einer weiteren erfindungsgemässen Ausführungsform eines Vakuumventils als Pendelventil;
- Fig. 5a,b: schematische Darstellung einer weiteren erfindungsgemässen Ausführungsform eines Vakuumventils als Transferventil; und
- Fig. 6a,b: schematische Darstellung einer weiteren erfindungsgemässen Ausführungsform eines Vakuumventils als Transferventil.

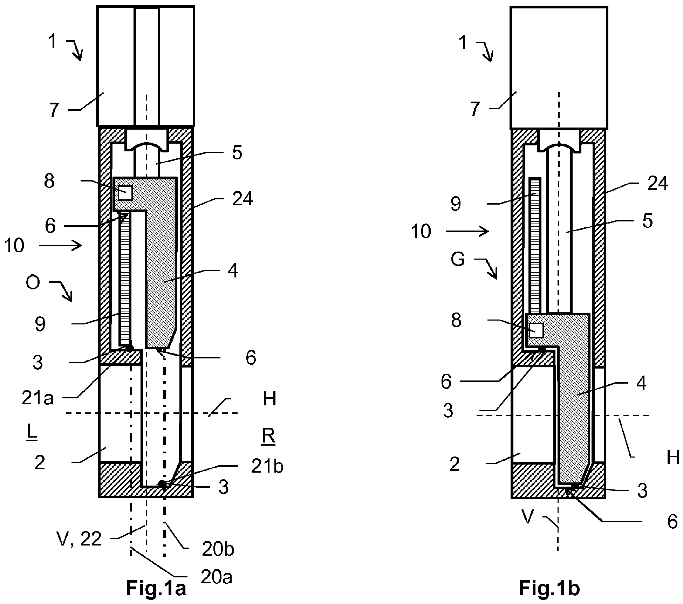

Die **Figuren 1a,1b** zeigen schematisch eine erste Ausführungsform eines erfindungsgemässen Vakuumventils 1. Im Beispiel ist das Ventil 1 ausgeführt als ein sogenanntes Monoventil und im Querschnitt dargestellt in einer Offenposition O (Fig. 1a) und einer Schliessposition G (Fig.1b).

Das Ventil 1 zum gasdichten Schliessen eines Fliesswegs mittels einer Linearbewegung besitzt ein Ventilgehäuse 24 mit einer Öffnung 2 für den Fliessweg, wobei die Öffnung 2 eine geometrische Öffnungsachse H entlang des Fliesswegs aufweist. Die Öffnung 2 verbindet einen ersten Gasbereich L, welcher sich in der Zeichnung links des Ventils 1 bzw. einer Trennwand (nicht dargestellt) befindet, mit einem zweiten Gasbereich R rechts davon. Eine solche Trennwand wird z.B. durch eine Kammerwand einer Vakuumkammer gebildet.

Das Verschlusselement 4 ist linear entlang einer zu der Öffnungsachse H quer verlaufenden, geometrischen Verstellachse V in einer Verschlusselementebene 22 von einer die Öffnung 2 freigebenden, geöffneten Position O in eine über die Öffnung 2 linear geschobene, geschlossene Position G in eine Schliessrichtung und umgekehrt zurück in eine Öffnungsrichtung mittels einer Antriebseinheit 7 mit einem beweglichen Stellelement 5, im Beispiel ein Verstellarm, verschiebbar.

Zum Beispiel umschliesst eine gekrümmte erste Dichtfläche 3 die Öffnung 2 des Ventilgehäuses 24 entlang eines ersten Abschnitts 21a in einer ersten Ebene 20a und entlang eines zweiten Abschnitts 21b in einer zweiten Ebene 20b. Die erste Ebene 20a und die zweite Ebene 20b sind zueinander beabstandet, verlaufen parallel zueinander und parallel zu der Verschlusselementebene 22. Somit weisen der erste Abschnitt 21a und der gegenüberliegende zweite Abschnitt 21b zueinander einen geometrischen Versatz quer zu der Verstellachse V und in Richtung der Öffnungsachse H auf. Zwischen den beiden gegenüberliegenden Abschnitten 21a und 21b in dem sich entlang der Verstellachse V erstreckenden Bereich ist die Öffnung 2 angeordnet.

Das Verschlusselement 4 weist eine zur ersten Dichtfläche 3 korrespondierende zweite Dichtfläche 6 auf, welche entlang zum ersten und zweiten Abschnitt 21a, 21b korrespondierender Abschnitte verläuft.

Monoventile, d.h. mittels einer einzigen linearen Bewegung schliessbare Vakuumventile haben beispielsweise den Vorteil eines vergleichsweise einfachen Schliessmechanismus, z.B. verglichen mit den mittels zweier Bewegungen schliessbaren Transferventilen, die einen verhältnismässig komplex aufgebauten Antrieb erfordern. Da das Verschlusselement zudem einteilig ausgebildet sein kann, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils 1 möglich ist.

Insbesondere liegt ein Vorteil von Monoventilen beispielsweise darin, dass die Dichtung 3, 6 aufgrund ihres Verlaufs beim Schliessen keiner Querbelastung in Querrichtung zur Längserstreckung der Dichtung 3, 6 unterliegt. Andererseits ist die Dichtung 3, 6 aufgrund Ihrer Quererstreckung zur Öffnungsachse H kaum in der Lage, auf das Verschlusselement 4 entlang der Öffnungsachse H auftretende Kräfte, die insbesondere bei grossem Differenzdruck auf das Verschlusselement 4 wirken können, aufzunehmen, was einen robusten Aufbau des Verschlusselements 4, dessen Antriebs und dessen Lagerung erfordert.

Das in den Figuren 1a und 1b gezeigte Vakuumventil 1 umfasst erfindungsgemäss einen Wegsensor 10, welcher im Beispiel ein positionsgebendes Element (Target) 8 aufweist und eine Sensorfläche 9 (Lineal) zu dessen Detektion. Der Wegsensor 10 ist beispielsweise ausgebildet als (berührungsloser) induktiver Wegsensor wie z.B. Differenzialtransformator mit verschiebbarem Kern, gepulster induktiver Linear-Positionssensor, PLCD-Wegsensor (Permanent Linear Contactless Displacement Sensor), optoelektronischer Wegsensor, potenziometrischer Wegsensor, magnetostriktiver Wegsensor, kapazitiver Wegsensor oder magnetischer Wegsensor. Je nach Sensor 10 ist das Lineal 9 aktiv und das positionsgebende Element 8 passiv oder umgekehrt, d.h. das (elektrisch oder elektronische) Messsignal bzw. Auswertungssignal wird entweder vom Lineal 9 oder Element 8 erzeugt bzw. abgegriffen.

Im Beispiel ist das Target 8 am oder im Verstellelement 4 befestigt, so dass es sich mit diesem entlang der Verstellachse V bewegt. Die Sensorfläche 9 erstreckt sich in Verstellrichtung V mindestens über die gesamte Verstellstrecke, so dass die Position des Targets 8 und damit des Verstellelements 4 über die gesamte mögliche lineare Bewegung des Verstellelements 4 messbar ist. Die Position wird dabei in Bezug zu einer Ausgangs- oder Nullstellung ermittelt, welche vorzugsweise entweder die Offenposition O oder die Geschlossenposition G ist. Bei dem Wegsensor 10 handelt es sich dabei bevorzugt um einen Absolutgeber. Alternativ wird ein inkrementeller Wegsensor verwendet.

Mittels des Positionssensors 10 kann also vorteilhaft die Ist-Position des Verstellelements 4 bestimmt werden. Die Positionsmessung kann sich dabei auf die Bestimmung einer oder weniger Positionen, bevorzugt der Endposition beschränken (also Offenposition O und/oder Schliessposition G), z.B. im Sinne einer Endlagendetektion. Vorzugsweise erfolgt jedoch eine fortlaufende oder kontinuierliche Positionsbestimmung, so dass die Position des Verstellelements 4 fortwährend und insbesondere deren zeitlicher Verlauf bekannt ist.

Durch die erfindungsgemässe Sensoranordnung kann somit beispielsweise während eines Prozessablaufs die Schliessfähigkeit des Ventils überprüft, der Anpressdruck entsprechend geregelt und gegebenenfalls ein Versagen der Dichtigkeit vorhergesagt werden. Insbesondere kann beispielsweise mit einer elektrischen Antriebseinheit 7 die Verpressung individuell eingestellt werden. Mit einem pneumatischen Antrieb 7 kann mit der Sensoranordnung zumindest überprüft werden, ob das Ventil geschlossen ist.

Die Kenntnis des zeitlichen Bewegungsverlaufs wird optional genutzt, um daraus die Geschwindigkeit der linearen Bewegung des Verschlusselements 4 zu bestimmen. Diese kann vorteilhaft für eine verbesserte Endlagenbestimmung herangezogen werden, wodurch Toleranzen im Vakuumventil weniger kritisch werden. Auch lässt sich somit die exakte Zeitdauer für den Schliess- oder Öffnungsvorgang ermitteln, wodurch z.B. Optimierungen oder Fehlererkennung ermöglich werden. Generell erlaubt eine Auswertung des Zeit-Weg-Verlaufs, welche z.B. durch eine externe Datenverarbeitungsanlage erfolgt, an welche der Positionssensor 10 bzw. das Vakuumventil 1 angeschlossen ist, Rückschlüsse auf den Zustand des Ventils 1. Unregelmässigkeiten oder Veränderungen im Laufe der Betriebszyklen können so erkannt werden, und so z.B. auf den Zustand der sich bewegenden Bauteile oder der Dichtflächen 3, 6 geschlossen werden. Haften die beiden Dichtflächen 3, 6 in der Schliessposition G z.B. aufeinander, so ist die am Bewegungsverlauf erkennbar, da die Position des Verstellelements 4 eine gewisse Zeit lang aufgrund der Haftkraft konstant bleibt obwohl es durch die Antriebseinheit 7 über das Verstellelement 5 angetrieben wird, gefolgt von einer schnellen Öffnungsbewegung und einem kurzen Rückfedern.

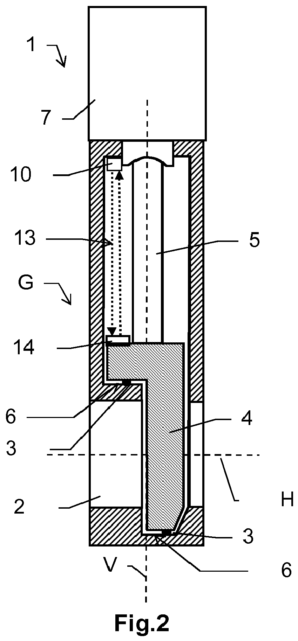

Figur 2 zeigt eine Alternative zur Ausführungsform nach Figur 1a, 1b. In diesem Beispiel weist das Vakuumventil 1 einen als Abstandssensor ausgebildeten Positionssensor 10 auf. Der Abstandssensor 10 ist z.B. ein optoelektronischer Abstandssensor oder ein Ultraschallsensor und emittiert mittels eines Senders ein entsprechendes Messsignal 13, z.B. Laserlicht, in Richtung des Verstellelements 4 bzw. der Vertikalachse V, so dass das Signal 13 auf das Verstellelement 4 trifft (im Beispiel auf dessen Rückfläche), von dort wenigstens zum Teil reflektiert und von einem Detektor des Sensors 10 wieder empfangen wird. Mittels Bestimmung der Signallaufzeit (Pulslaufzeitverfahren) und/oder Phasendifferenzmessung, Phasen-oder Frequenzlaufzeitverfahren und/oder nach dem Fizeau-Prinzip wird dabei die Entfernung zwischen Sensor 10 und Verstellelement 4 und damit die Position des Verstellelements 4 bestimmt. Als weitere Option erfolgt eine Positionsbestimmung mittels Triangulation.

Zur Verbesserung der Abstands- bwz. Positionsmessung weist das Vakuumventil 1 im Beispiel einen am Verstellelement angeordneten Reflektor 14 auf, der ausgebildet ist, das Messsignal 13 zum Sensor 10 hin zu reflektieren und damit den Signalpegel des empfangenen Messsignals 13 zu verbessern.

Alternativ zur dargestellten Anordnung ist der Sensor 10 am bewegten Teil, hier also dem Verschluss 4 angeordnet und sendet Messstrahlung 13 zu einer statischen Stelle des Ventils 1 (also eine zur Darstellung umgekehrte Anordnung).

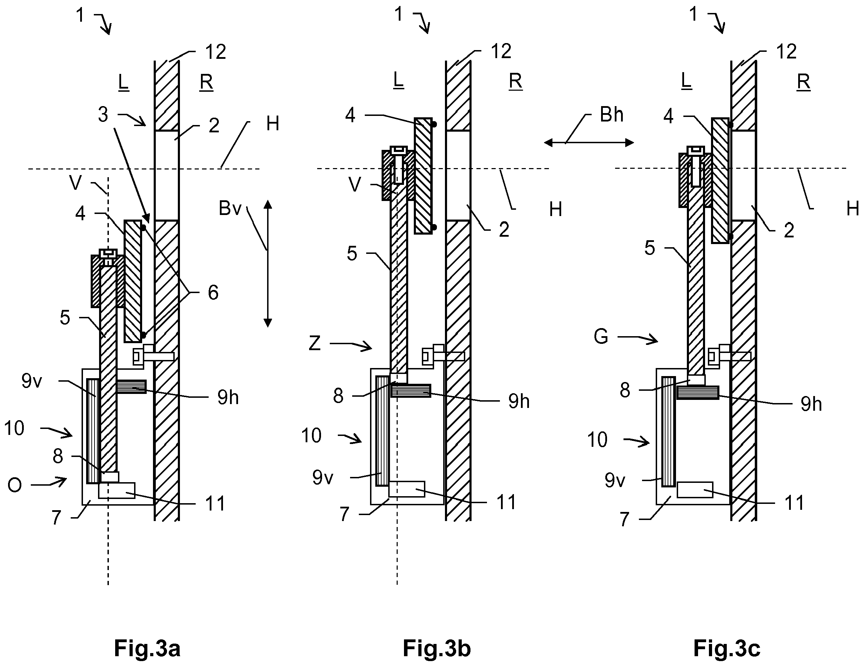

Die **Figuren 3a-3c** zeigen eine weitere Ausführungsform eines erfindungsgemässen Vakuumventils 1, welches im Beispiel ausgebildet ist als Transferventil, dargestellt in unterschiedlichen Verschlusspositionen.

Das gezeigte Transferventil ist eine Sonderform eines Schieberventils. Das Vakuumventil hat ein rechteckiges, plattenförmiges Verschlusselement 4 (z.B. Ventilteller), das eine Dichtfläche 6 zum gasdichten Verschliessen einer Öffnung 2 aufweist. Die Öffnung 2 hat einen dem Verschlusselement 4 entsprechenden Querschnitt und ist in einer Wand 12 ausgeformt. Die Öffnung 2 ist von einem Ventilsitz, der seinerseits ebenfalls eine mit der Dichtfläche 6 des Verschlusselements 4 korrespondierende Dichtfläche 3 bereitstellt, umgeben. Die Dichtfläche 6 des Verschlusselements 4 umläuft das Verschlusselement 4 und weist ein Dichtmaterial (Dichtung) auf. In einer Geschlossenposition werden die Dichtflächen 6, 3 aufeinander gedrückt und das Dichtmaterial wird dabei verpresst.

Die Öffnung 2 verbindet einen ersten Gasbereich L, welcher sich links der Wand 12 befindet, mit einem zweiten Gasbereich R rechts der Wand 12. Die Wand 12 wird z.B. durch eine Kammerwand einer Vakuumkammer gebildet. Das Vakuumventil 1 wird dann durch ein Zusammenwirken der Kammerwand 12 mit dem Verschlusselement 4 gebildet.

Das Verschlusselement 4 ist an einem Verstellarm 5 angeordnet, der hier beispielsweise stangenförmig ist, und sich entlang einer geometrischen Verstellachse V erstreckt. Der Verstellarm 5 ist mit einer Antriebseinheit 7 mechanisch gekoppelt, mittels welcher das Verschlussglied 4 in dem ersten Gasbereich L links der Wand 12 durch Verstellen des Verstellarms 5 mittels der Antriebseinheit 7 zwischen einer Offenposition O (Fig.3a) über eine Zwischenposition Z (Fig.3b) in eine Schliessposition G (Fig.3c) verstellbar ist.

In der Offenposition O befindet sich das Verschlusselement 4 ausserhalb des Projektionsbereichs der Öffnung 2 und gibt diese vollständig frei, wie in Figur 3a gezeigt.

Durch Verstellen des Verstellarms 5 in axiale Richtung parallel zu der ersten, "vertikalen" Verstellachse V und parallel zu der Wand 12 kann das Verschlusselement 4 mittels der Antriebseinheit 7 von der Offenposition O in die Zwischenposition Z verstellt werden.

In dieser Zwischenposition Z (Figur 3b) überdeckt die Dichtfläche 6 des Verschlusselements 4 die Öffnung 2 und befindet sich in beabstandeter Gegenüberlage zu der die Öffnung 2 umgebenden Dichtfläche 3 des Ventilsitzes.

Durch Verstellen des Verstellarms 5 in Richtung der zweiten, "horizontalen" Verstellachse H (quer zur ersten Verstellachse V), also z.B. senkrecht zur Wand 12 und zum Ventilsitz, kann das Verschlusselement 4 von der Zwischenposition Z in die Geschlossenposition G verstellt werden (Figur 3c).

In der Geschlossenposition G verschliesst das Verschlusselement 4 die Öffnung 2 gasdicht und trennt den ersten Gasbereich L von dem zweiten Gasbereich R gasdicht.

Das Öffnen und Schliessen des Vakuumventils erfolgt also mittels der Antriebseinheit 7 durch eine L-förmige Bewegung in zwei zueinander senkrechte Richtungen H, V des Verschlusselements 4 und des Verstellarms 5. Daher wird das gezeigte Transferventil auch L-Typ-Ventil genannt.

Ein Transferventil 1 wie gezeigt wird typischerweise zur Abdichtung eines Prozessvolumens (Vakuumkammer) und zur Be-und Entladung des Volumens vorgesehen. Häufige Wechsel zwischen der Offenposition O und der Geschlossenposition G sind bei einem solchen Einsatz die Regel. Hierdurch können verstärkte Abnutzungserscheinungen der Dichtflächen 6, 3 und der mechanische bewegten Bauteile, z.B. des Verstellelements 5 oder anderer Teile der Antriebseinheit 7 eintreten.

Unter anderem zur frühzeitigen Feststellung solcher Abnutzungserscheinungen weist das Vakuumventil 1 erfindungsgemäss einen Positionssensor 10 auf, der im Beispiel als zweiachsiger Wegsensor ausgebildet ist. Im Unterschied zur Ausführungsform nach Beispiel der Figuren 1a,b wird mittels eines am Verstellelement 5 angebrachten Targets 8 in beide Verstellrichtungen V, H eine Position bestimmt. Hierzu weist das Vakuumventil 1 ein erstes, "vertikales" Lineal 9v zur Positionsbestimmung der "vertikalen" Bewegung zwischen der Offenposition O zur Zwischenstellung Z auf und ein zweitens, "horizontales" Lineal 9h zur Positionsbestimmung der "horizontalen" Bewegung zwischen der Zwischenstellung Z und der Schliessposition G. Mittels des am Verstellelement 5 angeordneten Targets 8 und des ersten Lineals 9v wird also in sequentieller Abfolge gemäss der sequentiellen Bewegungsfolge Offenposition O -Zwischenposition Z - Schliessposition G (oder umgekehrt) die Position des Verstellelements 5 in der ersten, "vertikalen" Verstellrichtung V gemessen, mittels des Targets 8 und des zweiten Lineals 9h die Position in der zweiten, "horizontalen" Verstellrichtung H.

Im Beispiel weist das Ventil 1 bzw. der Positionssensor 10 weiter eine Steuerungs- und/oder Auswerteeinheit 11 auf, mit der die Positionsmessung gesteuert wird und/oder Positionsdaten aufgezeichnet oder ausgewertet werden, so dass beispielsweise auf einen externen Rechner (weitgehend) verzichtet werden kann und z.B. eine rein ventilinterne Überwachung oder Zustandskontrolle des Ventils 1 erfolgt.

Alternativ zu den dargestellten sequentiell angeordneten beiden linearen Linealen 9v, 9h wird eine einzige 2D-Sensorfläche verwendet (nicht dargestellt), die z.B. optisch abgetastet wird, so dass eine simultane Bestimmung der Position des Verstellelements 5 in beide Achsen bzw. Richtungen V und H ermöglicht ist.

Als weitere Alternative erfolgt die Positionsbestimmung bez. der beiden Verstellrichtungen V, H bzw. der beiden Verstellbewegungen nicht mittels eines einzigen Positionssensors 10, sondern das Ventil 1 weist jeweils einen Positionssensor 10 für jeweils eine Verstellrichtung V, H bzw. Verstellbewegung auf, umfasst also zwei Positionssensoren 10.

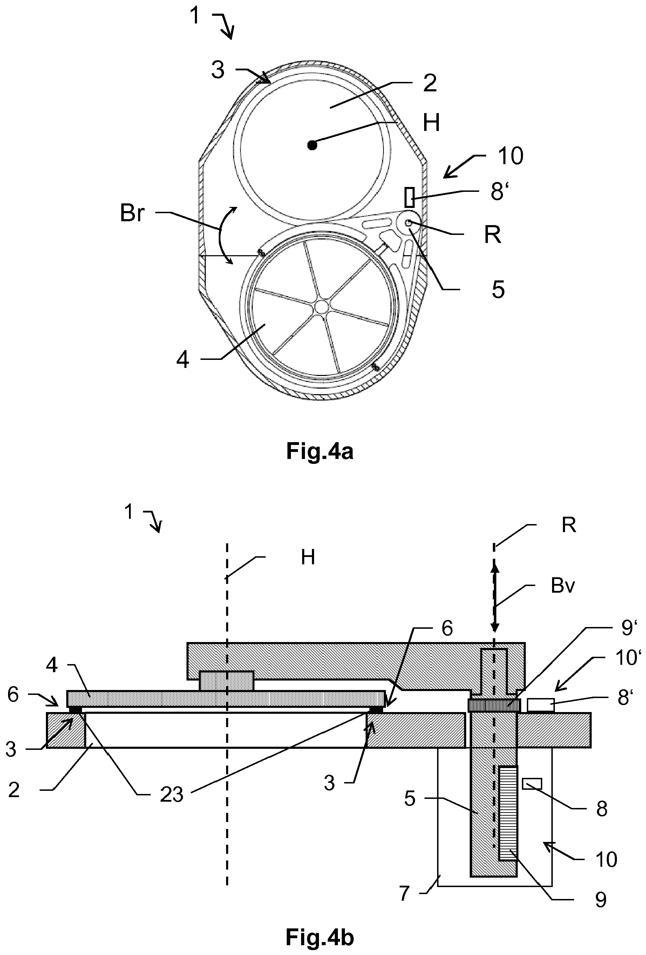

Figur 4a und Figur 4b zeigen schematisch eine weitere mögliche Ausführungsform des erfindungsgemässen Ventils in Form eines Pendelventils 1. Das Ventil 1 zum im Wesentlichen gasdichten Unterbrechen eines Fliesswegs besitzt ein Ventilgehäuse, welches eine Öffnung 2 aufweist. Die Öffnung 2 hat hier beispielsweise einen kreisrunden Querschnitt. Die Öffnung 2 wird von einem Ventilsitz umschlossen. Dieser Ventilsitz wird von einer axial in Richtung eines Ventiltellers 4 weisenden und quer zur Öffnungsachse H verlaufenden, die Form eines Kreisrings aufweisenden (ersten) Dichtfläche 3, welche im Ventilgehäuse ausgeformt ist, gebildet. Der Ventilteller 4 ist um eine Rotationsachse R schwenkbar und im Wesentlichen parallel zur Öffnungsachse H verstellbar. In einer Geschlossenstellung G (Fig.4b) des Ventiltellers 4 (Ventilverschluss), ist die Öffnung 2 mittels des Ventiltellers 4, welcher eine zweite Dichtfläche 6 aufweist, gasdicht verschlossen. Eine Offenstellung O des Ventiltellers 4 ist in Fig. 4a veranschaulicht.

Der Ventilteller 4 ist über einen seitlich an dem Teller angeordneten, sich senkrecht zur Öffnungsachse H erstreckenden Arm 5 mit einer Antriebseinheit 7 verbunden. Dieser Arm 5 befindet sich in der Geschlossenstellung G des Ventiltellers 4 ausserhalb des entlang der Öffnungsachse H geometrisch projizierten Öffnungsquerschnitts der Öffnung 2.

Der Antrieb 7 ist durch Einsatz eines Motors und eines entsprechenden Getriebes derart ausgebildet, dass der Ventilteller 4 - wie bei einem Pendelventil üblich - mittels einer Querbewegung x des Antriebs 7 quer zur Öffnungsachse H und im Wesentlichen parallel über den Querschnitt der Öffnung 2 und senkrecht zur Öffnungsachse H in Form einer Schwenkbewegung Br um die Schwenkachse R zwischen einer Offenstellung O und einer Zwischenstellung schwenkbar und mittels einer parallel zur Öffnungsachse 5 erfolgenden Längsbewegung Bv des Antriebs 7 linear verschiebbar ist. In der Offenstellung O, ist der Ventilteller 4 in einem seitlich neben der Öffnung 2 angeordneten Verweilabschnitt positioniert, so dass die Öffnung 2 und der Fliessweg freigegeben sind. In der Zwischenstellung ist der Ventilteller 4 über der Öffnung 2 beabstandet positioniert und überdeckt den Öffnungsquerschnitt der Öffnung 2. In der Geschlossenstellung ist die Öffnung 2 gasdicht geschlossen und der Fliessweg unterbrochen, indem ein gasdichter Kontakt zwischen der Dichtfläche 6 des Ventilverschluss 4 (Ventilteller) und der Dichtfläche 3 des Ventilsitz besteht.

Um ein automatisiertes und geregeltes Öffnen und Schliessen des Ventils 1 zu ermöglichen, sieht das Ventil 1 beispielsweise eine elektronische Regel- und Steuerungseinheit vor (nicht dargestellt), die derart ausgebildet ist und mit dem Antrieb 7 in derartiger Verbindung steht, dass der Ventilteller 4 zum gasdichten Abschliessen eines Prozessvolumens oder zum Regeln eines Innendrucks dieses Volumens entsprechend verstellbar ist.

Im vorliegenden Ausführungsbeispiel ist der Antrieb 7 als ein Elektromotor ausgebildet, wobei das Getriebe derart umschaltbar ist, dass ein Antreiben des Antriebs 78 entweder die Querbewegung Br oder die Längsbewegung Bv bewirkt. Der Antrieb mitsamt Getriebe wird von der Regelung elektronisch angesteuert. Derartige Getriebe, insbesondere mit Kulissenschaltungen, sind aus dem Stand der Technik bekannt. Weiters ist es möglich, mehrere Antriebe zum Bewirken der Rotationsbewegung Br und der linearen Bewegung Bv einzusetzen, wobei die Steuerung die Ansteuerung der Antriebe übernimmt.

Das präzise Regeln bzw. Einstellen des Durchflusses mit dem beschriebenen Pendelventil 1 ist nicht nur durch das schwenkende Verstellen des Ventiltellers 4 zwischen der Offenstellung O und der Zwischenstellung mittels der Querbewegung Br, sondern vor allem durch lineares Verstellen des Ventiltellers 4 entlang der Öffnungsachse H bzw. R zwischen der Zwischenstellung und der Geschlossenstellung mittels der Längsbewegung Bv möglich. Das beschriebene Pendelventil kann für präzise Regelaufgaben eingesetzt werden.

Sowohl der Ventilteller 4 als auch der Ventilsitz besitzen jeweils eine Dichtfläche - eine erste und eine zweite Dichtfläche 3, 6. Die erste Dichtfläche 3 weist zudem eine Dichtung 23 auf. Diese Dichtung 23 kann beispielsweise als Polymer mittels Vulkanisation auf den Ventilsitz aufvulkanisiert sein. Alternativ kann die Dichtung 23 z.B. als O-Ring in einer Nut des Ventilsitzes ausgeführt sein. Auch kann ein Dichtmaterial auf den Ventilsitz aufgeklebt sein und dadurch die Dichtung 23 verkörpern. In einer alternativen Ausführungsform kann die Dichtung 23 seitens des Ventiltellers 4, insbesondere auf der zweiten Dichtfläche 6, angeordnet sein. Auch Kombinationen dieser Ausführungen sind denkbar. Solche Dichtungen 23 sind selbstverständlich nicht auf das im Beispiel beschriebene Ventil 1 beschränkt, sondern auch bei den weiteren beschriebenen Ventilausführungsformen anwendbar.

Der Ventilteller 4 wird beispielsweise anhand von Regelgrössen und eines ausgegebenen Steuersignals variabel eingestellt. Als Inputsignal wird zum Beispiel eine Information über einen aktuellen Druckzustand in einem mit dem Ventil 1 verbundenen Prozessvolumen erhalten. Zudem kann dem Regler eine weitere Inputgrösse, z.B. ein Massenzustrom in das Volumen, bereitgestellt werden. Anhand dieser Grössen und anhand eines vorgegebenen Solldrucks, der für das Volumen eingestellt bzw. erreicht werden soll, erfolgt dann eine geregelte Einstellung des Ventils 1 über die Zeit eines Regelzyklus, so dass ein Massenabfluss aus dem Volumen mittels des Ventils 1 über die Zeit geregelt werden kann. Hierzu ist hinter dem Ventil 1 eine Vakuumpumpe vorgesehen, d.h. das Ventil 1 ist zwischen der Prozesskammer und der Pumpe angeordnet. Somit kann ein gewünschter Druckverlauf eingeregelt werden.

Durch die Einstellung des Ventilverschlusses 4 wird ein jeweiliger Öffnungsquerschnitt für die Ventilöffnung 2 eingestellt und damit die mögliche Gasmenge eingestellt, die pro Zeiteinheit aus dem Prozessvolumen evakuiert werden kann. Der Ventilverschluss 4 kann zu diesem Zweck eine von einer kreisrunden Form abweichende Form aufweisen, insbesondere um einen möglichst laminaren Medienfluss zu erreichen.

Zur Einstellung des Öffnungsquerschnitts ist der Ventilteller 4 durch die Regel- und Steuerungseinheit mittels der Querbewegung Br des Antriebs 7 von der Offenstellung O in die Zwischenstellung und mittels der Längsbewegung Bv des Antriebs 7 von der Zwischenstellung in die Geschlossenstellung verstellbar. Zum vollständigen Öffnen des Fliesswegs ist der Ventilteller 4 durch die Steuerung mittels der Längsbewegung Bv des Antriebs 7 von der Schliessstellung G in der Zwischenstellung und von dort aus mittels der Drehbewegung Br des Antriebs 7 von der Zwischenstellung in die Offenstellung O verstellbar.

Das Anpressen des Ventiltellers 4 auf den Ventilsitz muss derart erfolgen, dass sowohl die geforderte Gasdichtigkeit innerhalb des gesamten Druckbereichs sichergestellt ist, als auch eine Beschädigung des Ventils 1, oder genauer der Dichtflächen 3, 6 bzw. der Dichtung(en) 23 durch zu grosse Druckbeanspruchung vermieden wird. Um dies zu gewährleisten, sehen bekannte Ventile eine in Abhängigkeit von der zwischen den beiden Ventiltellerseiten herrschenden Druckdifferenz geregelte Anpressdruckregelung des Ventiltellers 4 vor.

Erfindungsgemäss weist das Ventil 1 zwei Positionssensoren 10 und 10', im Beispiel ausgebildet als Linearencoder 10 und Winkelencoder 10'.

Der lineare Positionssensor 10 weist eine Skala 9 auf, welche am Arm 5 entlang der linearen Bewegungsrichtung Bv am Arm 5 erstreckt und somit in Vorschubrichtung Bv relativ zum feststehendem Teil des Ventils 1, also beispielsweise in Bezug zum Ventilgehäuse oder der Antriebseinheit 7, beweglich ist. Die jeweilige Relativposition wird vom Linearencoder mittels eines Lesekopfs 8, der die Skala 9 abtastet, ermittelt, welche hierfür Positionscode aufweist. Die Skale 9 und/oder der Lesekopf sind dabei zumindest teilweise derart "breit" ausgebildet, dass auch in unterschiedlichen Rotationsstellungen des Arms 5 eine lineare Position messbar ist. Beispielsweise erstreckt sich also die Skala 9 soweit um den Arm 5, dass ein Teil von ihr sowohl in Offenstellung O als auch in Schliessstellung G dem Detektor 8 gegenübersteht und die Skala 9 nicht aus dem "Sichtfeld" des Detektors 8 herausgeschwenkt werden kann.

Beim Positionscode handelt es sich bevorzugt um einen absoluten Positionscode. Alternativ handelt es sich beim Positionscode um eine inkrementelle Codierung. Bei absoluten Positionssensoren 10, 10' ist jeder Relativlage von Lesekopf 8 zu Skala 9 unmittelbar eine Position zuordenbar (die bezogen ist auf eine vorab definierte Nullposition), indem die Skala 9 über die gesamte Messstrecke einen absoluten Positionscode aus eindeutigen Codewörtern aufweist, welche durch eine Steuer- und Auswerteeinheit genau einer Position zuordenbar ist. Bei Positionsencodern 10, 10' mit inkrementellem Bestimmen von Positionen hingegen sind die Abtastsignale nicht eindeutig, sondern wiederholen sich über den gesamten Messbereich vielfach. In einer Steuer- und Auswerteeinheit des Encoders ist hinterlegt, welcher Distanz ein Inkrement entspricht. Somit kann die Distanz, welche bei einer Relativbewegung von Skala 9 und Lesekopf 8 zurückgelegt wird, und damit eine relative Position durch Abzählen der Inkremente bestimmt werden. Um eine solche relative Position absolut zu verorten, wird bei einer Relativbewegung von einer definierten Nullstellung als absoluter Bezugspunkt ausgegangen. Eine solche Nullstellung bzw. Nullpunkt wird z.B. durch einen vom Lesekopf 8 detektierbaren Positionsreferenzmarker auf der Skala 9 (bzw. bei stationärer Skala 9 auf dem Lesekopf 8) definiert. Nachteilig an Sensoren 10, 10' mit inkrementellem Bestimmen von Translationslagen oder Winkeln ist somit, dass bei einem Neustart des Messsystems jedes Mal wieder von einer Null- bzw. Referenzstellung ausgegangen werden muss. Dagegen erzeugen absolute Linear- oder Winkelencoder für jede Relativlage der zueinander translatier- oder drehbaren Teile eindeutig unterscheidbare Abtastsignale. Dadurch kann einer jeweiligen Relativlage unmittelbar, d.h. ohne eine Referenz- bzw. Ausgangsstellung anzufahren, eine eindeutige Linearposition bzw. ein eindeutiger Winkel zugeordnet werden.

Der zweite, als Winkelencoder ausgebildete Positionssensor 10' weist ebenfalls eine Skala 9' auf, mit einer absolute oder inkrementelle Winkelcodierung, welche von einem Lesekopf 8' abgetastet wird, so dass eine Information über die Winkelstellung des Arms 5 und damit des Ventiltellers 4 erhalten werden kann. Die Skala 9' erstreckt sich im Beispiel wenigstens teilweise rund um den Arm 5 (wenigstens soweit, dass damit der Umfang der Drehbewegung Br abgedeckt ist), so dass sie mit dem Arm 5 relativ zum feststehenden Detektor 8' bzw. dem gesamten feststehenden Teil des Ventils 1 rotierbar ist.

Mittels des ersten und zweiten Positionssensors 10, 10' kann also die Lage der beweglichen Teile des Ventils 1, insbesondere des Ventiltellers 4, und damit der Zustand des Vakuumventils 1, insbesondere im Hinblick auf Gasdichtigkeit bzw. erforderliche Zuverlässigkeit der gasdichten Abschliessbarkeit, vorteilhaft überwacht und fortlaufend bewertet werden.

Alternativ zu einem Pendelventil 1 wie dargestellt kann das erfindungsgemässe Vakuumventil 1 mit einem anderen Vakuumventiltyp, z.B. einem Klappventil, Schieberventil oder einem sog. Butterfly-Regelventil, realisiert sein. Ferner sind ebenso Pendelventile einsetzbar, deren Verschluss nur in einer Richtung verstellt werden kann.

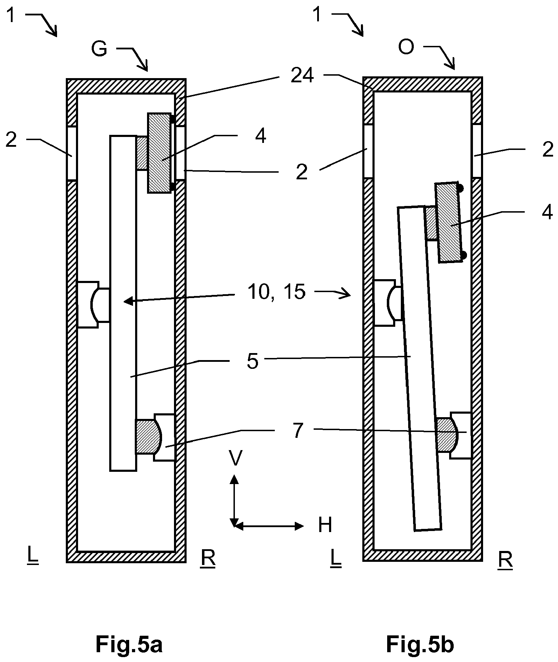

Die **Figuren 5a** und **5b** zeigen schematisch eine weitere mögliche Positionssensoranordnung in erfindungsgemässen Transferventilen, dargestellt in einer Geschlossenposition G (Fig.5a) und einer Offenposition O (Fig.5b). In den gezeigten Figuren ist der Ventilsitz 3 an einem Gehäuse 24 des Vakuumventils 1 ausgebildet. Für einen Fachmann ist jedoch klar, dass die nachfolgende Beschreibung im Wesentlichen analog auf Ausführungsformen anwendbar ist, wobei der Ventilsitz von einer Prozesskammer, d.h. einem Kammergehäuse, bereitgestellt wird.

Weiterhin versteht es sich von selbst, dass der hier rein schematisch als Kippmechanismus dargestellte Ventilmechanismus nicht einschränkend zu verstehen ist und ein Fachmann die erfinderische Sensoranordnung beispielsweise in analoger Weise auf einen beliebigen L-Motion Antrieb übertragen kann, z.B. einen L-Motion Antrieb mit zwei senkrecht aufeinander stehenden linearen Verstellrichtungen des Ventiltellers.

Zur kontrollierten Führung des Verstellarms 5 weist das Vakuumventil 1 hier beispielsweise eine Führungskomponente 15 auf, wobei die Antriebseinheit 7 und die Führungskomponente 15 jeweils in einer festen Anordnung zueinander stehen, hier beispielsweise dadurch, dass sowohl die Antriebseinheit 7 wie auch die Führungskomponente 15 jeweils ortsfest mit dem Ventilgehäuse 24 verbunden sind. Der Verstellarm 5 ist ferner mit dem Ventilverschluss 4 und der Antriebseinheit 7 mechanisch gekoppelt, wobei durch Verstellen des Verstellarms 5 mittels der Antriebseinheit 7, der Ventilverschluss 4 zwischen der Offenposition O und der Schliessposition G im Wesentlichen parallel zum Ventilsitz verstellbar ist, insbesondere in einer L-Motion Bewegung wie in den Figuren 3a bis 3c beschrieben.

Erfindungsgemäss weist nun die Führungskomponente einen Positionssensor 10 auf. Der Positionssensor 10 ist dabei dergestalt ausgebildet, dass sowohl die "vertikale" Komponente V der Bewegung des Arms 5 bzw. des Ventiltellers 4 gemessen werden kann also auch deren "horizontale" Komponente H. Beispielsweise weist der Positionssensor 10 hierzu einen Drehgeber auf, der sowohl zur Bestimmung der Kippstellung des Arms 5 genutzt wird (also der "horizontalen" Komponente) als auch dessen lineare Translation, indem diese zuvor in eine Drehbewegung übersetzt wird. Alternativ zur Darstellung werden zwei getrennte Positionssensoren verwendet und/oder der oder die Positionssensoren sind an anderer Stelle im Ventil angeordnet, z.B. am Antrieb 7.

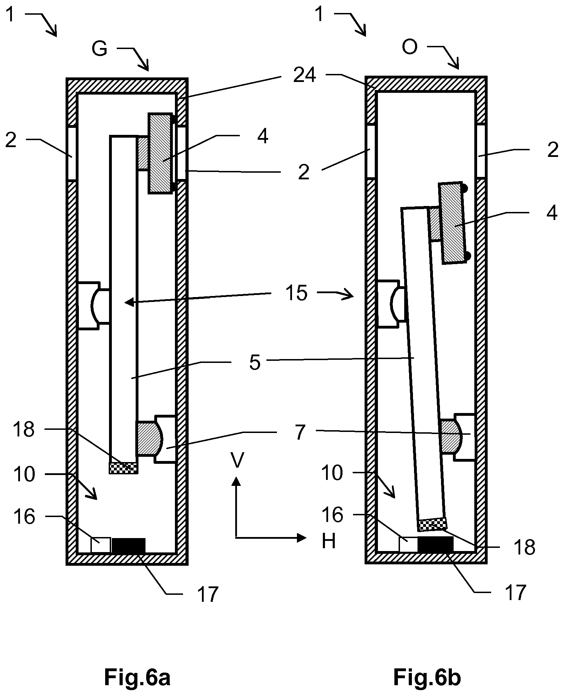

Die **Figuren 6a** und **6b** zeigen in Anlehnung zu den Figuren 5a, 5b eine weitere mögliche Ausbildungsform eines erfindungsgemässen Vakuumventils 1. Im Unterschied zu der Ausführungsform nach den Figuren 5a, 5b ist hier der Positionssensor 10 zur Messung der Position des Ventilsverschlusses 4 bzw. des Verstellelements 5 ausgebildet als ein System mit einem Beleuchtungsmittel 16, z.B. einer LED, zur Beleuchtung des hinteren Endes des Verstellarms 5 und einem Kamerasystem 17 zur Erfassung von vom Verstellarm 5 reflektierter Beleuchtungsstrahlung. Das Kamerasystem 17 weist z.B. einen positionssensitiven Detektor auf, so dass aus der Auftreffposition reflektierter Strahlung auf dem Detektor auf eine Position des Verstellarms 5 geschlossen werden kann. Alternativ erfolgt beispielsweise ein Erzeugen eines Bilds mittels der erfassten Strahlung und eine Bildauswertung dergestalt, dass hieraus eine Position bestimmbar ist. Kamerabasierte Positionsbestimmungen sind prinzipiell aus dem Stand der Technik bekannt. Ebenfalls bekannt ist die Verwendung eines optisch erfassbaren Musters zur Verbesserung einer bildhaften Positionsbestimmung. Demgemäss weist -wie dargestellt- das hintere Ende des Verstellelements 5 ein solches optische Muster 18. Aus der Position des Musters 18 im Kamerabild kann auf die "horizontale" Stellung des Verstellelements 5 geschlossen werden, aus der abgebildeten Grösse des abgebildeten Musters oder von Teilen davon (im Vergleich zu einer hinterlegten Referenzgrösse) auf dessen "vertikale" Stellung (Abstand zur Kamera).

Es versteht sich, dass diese dargestellten Figuren nur mögliche Ausführungsbeispiele schematisch darstellen. Die verschiedenen Ansätze können ebenso miteinander sowie mit Verfahren und Vorrichtungen des Stands der Technik kombiniert werden.

## Patentansprüche

1. Vakuumventil (1), insbesondere Vakuumschieberventil, Pendelventil oder Monoventil, zur Regelung eines Volumen- oder Massenstroms und/oder zum gasdichten Unterbrechen eines Fliesswegs, mit
• einem Ventilsitz, der eine eine Öffnungsachse (H) definierende Ventilöffnung (2) und eine die Ventilöffnung (2) umlaufende erste Dichtfläche (3) aufweist,
• einem Ventilverschluss (4), insbesondere Ventilteller, zur Regelung des Volumen- oder Massenstroms und/oder zur Unterbrechung des Fliesswegs, mit einer zu der ersten Dichtfläche (3) korrespondierenden zweiten Dichtfläche (6), deren veränderliche Lage durch eine jeweilige Position und Ausrichtung des Ventilverschlusses (4) bestimmt ist,
• einer mit dem Ventilverschluss (4) gekoppelten Antriebseinheit (7) mit wenigstens einem beweglichen Verstellelement (5), wobei die Antriebseinheit (7) zum Ausführen einer Verstellbewegung (Bv, Bh, Br) ausgebildet ist, so dass der Ventilverschluss (4) von
einer Offenposition (O), in welcher der Ventilverschluss (4) und der Ventilsitz relativ zueinander kontaktlos vorliegen, in
□ eine Schliessposition (G), in welcher, insbesondere über eine Dichtung (23), ein bezogen auf die Öffnungsachse (H) axial dichtender Kontakt zwischen der ersten Dichtfläche (3) und der zweiten Dichtfläche (6) besteht und die Ventilöffnung (2) dadurch gasdicht verschlossen ist,
und zurück verstellbar ist,
**dadurch gekennzeichnet, dass**
das Vakuumventil (1) ferner wenigstens einen Positionssensor (10, 10') umfasst, wobei der Positionssensor (10, 10') derart ausgebildet und im Vakuumventil (1) angeordnet ist, dass, insbesondere fortlaufend, eine Position des Ventilverschlusses (4) und/oder des wenigstens einen Verstellelements (5) bezogen auf eine Nullposition (O, G), insbesondere der Offenposition (O) oder Schliessposition (G), messbar ist.

2. Vakuumventil (1) nach Anspruch 1,
**dadurch gekennzeichnet, dass**
der Positionssensor (10, 10') derart ausgebildet und im Vakuumventil (1) angeordnet ist, dass der zeitliche Verlauf wenigstens eines Teils der Verstellbewegung (Bv, Bh, Br) bestimmbar ist, insbesondere dergestalt, dass wenigstens eine Geschwindigkeit der Verstellbewegung (Bv, Bh, Br) für zumindest einen Zeitabschnitt der Verstellbewegung (Bv, Bh, Br) bestimmbar ist.

3. Vakuumventil (1) nach Anspruch 1 oder 2,
**dadurch gekennzeichnet, dass**
der Positionssensor (10, 10') als Wegsensor oder Abstandssensor und/oder absoluter Positionssensor (10, 10') ausgebildet ist.

4. Vakuumventil (1) nach einem der vorhergehenden Ansprüche,
**dadurch gekennzeichnet, dass**
die Verstellbewegung (Bv, Bh, Br) eine zumindest im Wesentlichen lineare Verstellbewegung (Bv, Bh) umfasst und der Positionssensor (10) ausgebildet und angeordnet ist zur Erfassung zumindest eines Teils der linearen Verstellbewegung (Bv, Bh), insbesondere wobei der Positionssensor (10) ein Linearencoder ist.

5. Vakuumventil (1) nach einem der vorhergehenden Ansprüche,
**dadurch gekennzeichnet, dass**
die Verstellbewegung (Bv, Bh, Br) eine zumindest im Wesentlichen rotatorische Verstellbewegung (Br) umfasst und der Positionssensor (10') ausgebildet und angeordnet ist zur Erfassung zumindest eines Teils der rotatorischen Verstellbewegung (Br), insbesondere wobei der Positionssensor (10') ein Winkelencoder ist.

6. Vakuumventil (1) nach einem der vorhergehenden Ansprüche,
**dadurch gekennzeichnet, dass**
der Positionssensor (10, 10')
• ein induktiver, optischer, magnetischer, magnetostriktiver, potenziometrischer und/oder kapazitiver Positionssensor (10, 10') ist, und/oder
• ausserhalb eines durch das Vakuumventil (1) definierten von einer äusseren Umgebung abgetrennten Vakuumbereichs angeordnet ist.

7. Vakuumventil (1) nach einem der vorhergehenden Ansprüche,
**dadurch gekennzeichnet, dass**
• der Positionssensor (10, 10') derart ausgebildet und im Vakuumventil (1) angeordnet ist, dass mittels des einen Positionssensors (10, 10') eine Positionsmessung bezüglich wenigstens zweier, insbesondere zueinander im Wesentlichen orthogonaler, Verstellrichtungen durchführbar ist, oder
• das Vakuumventil (1) wenigstens zwei Positionssensoren (10, 10') aufweist, welche derart ausgebildet und im Vakuumventil (1) angeordnet sind, dass mittels des ersten Positionssensors (10, 10') eine Position bezüglich einer ersten Verstellrichtung und mittels des zweiten Positionssensors (10', 10) eine Position bezüglich einer zweiten Verstellrichtung messbar ist, insbesondere wobei beide Verstellrichtungen zueinander im Wesentlichen orthogonal sind, und/oder
• der Ventilsitz durch einen strukturell mit dem Vakuumventil (1) verbunden Teil des Vakuumventils gebildet wird, insbesondere wobei der Ventilsitz an einem Gehäuse (24) des Vakuumventils (1) ausgebildet ist, oder von einer Prozesskammer, insbesondere einem Kammergehäuse, bereitgestellt ist.

8. Vakuumventil (1) nach einem der vorhergehenden Ansprüche,
**dadurch gekennzeichnet, dass**
das Vakuumventil (1) eine derart ausgebildete Verarbeitungseinheit (11) aufweist, dass ein erfasstes Positionssensormesssignal mittels der Verarbeitungseinheit (11) verarbeitbar ist und anhand des erfassten Messsignals eine Zustandsinformation des Vakuumventils (1) ermittelt wird.

9. Vakuumventil (1) nach Anspruch 8,
**dadurch gekennzeichnet, dass**
die Zustandsinformation bezüglich einer mechanischen und/oder strukturellen Integrität der des Ventilverschlusses (4) und/oder des Verstellelements (5) bereitgestellt wird, insbesondere wobei die Zustandsinformation mittels eines Ist-Soll-Vergleichs für das erfasste Messsignal ermittelt ist.

10. Vakuumventil (1) nach Anspruch 8 oder 9,
**dadurch gekennzeichnet, dass**
basierend auf einem Abgleich der Zustandsinformation mit vordefinierten Toleranzwerten ein Ausgabesignal bereitgestellt wird bezüglich einer Bewertung eines durch das Vakuumventil (1) gesteuerten Prozesses.

11. Verfahren zur Steuerung eines Vakuumventils (1), insbesondere eines Vakuumschieberventils, Pendelventils oder Monoventils, wobei das Vakuumventil (1) ausgebildet ist zur Regelung eines Volumen- oder Massenstroms und/oder zum gasdichten Unterbrechen eines Fliesswegs und das Vakuumventil (1) aufweist
• einen Ventilsitz, der eine eine Öffnungsachse (H) definierende Ventilöffnung (2) und eine die Ventilöffnung (2) umlaufende erste Dichtfläche (3),
• einen Ventilverschluss (4), insbesondere Ventilteller, zur Regelung des Volumen- oder Massenstroms und/oder zur Unterbrechung des Fliesswegs, mit einer zu der ersten Dichtfläche (3) korrespondierenden zweiten Dichtfläche (6), deren veränderliche Lage durch eine jeweilige Position und Ausrichtung des Ventilverschlusses (4) bestimmt ist,
• einer mit dem Ventilverschluss (4) gekoppelten Antriebseinheit (7) mit wenigstens einem beweglichen Verstellelement (5), wobei die Antriebseinheit (7) zum Ausführen einer Verstellbewegung (Bv, Bh, Br) ausgebildet ist, so dass der Ventilverschluss (4) von
□ einer Offenposition (O), in welcher der Ventilverschluss (4) und der Ventilsitz relativ zueinander kontaktlos vorliegen, in
□ eine Schliessposition (G), in welcher, insbesondere über eine Dichtung (23), ein bezogen auf die Öffnungsachse (H) axial dichtender Kontakt zwischen der ersten Dichtfläche (3) und der zweiten Dichtfläche (6) besteht und die Ventilöffnung (2) dadurch gasdicht verschlossen ist,
und zurück verstellbar ist,
**dadurch gekennzeichnet, dass**
das im Rahmen des Verfahrens, insbesondere fortlaufend, eine, insbesondere absolute, Position des Ventilverschlusses (4) und/oder des wenigstens einen Verstellelements (5) bezogen auf eine Nullposition (O, G), insbesondere der Offenposition (O) oder Schliessposition (G), gemessen wird.

12. Verfahren nach Anspruch 11,
**dadurch gekennzeichnet, dass**
im Rahmen des Verfahrens basierend auf der Positionsmessung eine Zustandsinformation des Vakuumventils (1), insbesondere bezüglich einer mechanischen und/oder strukturellen Integrität des Ventilverschlusses (4) oder des Verstellelements (5), ermittelt wird, insbesondere wobei
• die Zustandsinformation mittels eines Ist-Soll-Vergleichs für das erfasste Messsignal ermittelt ist und/oder
• basierend auf einem Abgleich der Zustandsinformation mit vordefinierten Toleranzwerten ein Ausgabesignal bereitgestellt wird bezüglich einer Bewertung eines durch das Vakuumventil (1) gesteuerten Prozesses.

13. Verfahren nach Anspruch 11 oder 12,
**dadurch gekennzeichnet, dass**
im Rahmen des Verfahrens basierend auf der Positionsmessung bestimmt wird
• eine Verstellgeschwindigkeit des Ventilverschlusses (4) und/oder des wenigstens einen Verstellelements (5) wenigstens für einen Teil der Verstellbewegung (Bv, Bh, Br) und/oder
• die Zeitdauer der Verstellbewegung (Bv, Bh, Br) von der Offenposition (O) zur Schliessposition (G) und/oder umgekehrt.

14. Verfahren nach einem der Ansprüche 11 bis 13,
**dadurch gekennzeichnet, dass**
im Rahmen des Verfahrens basierend auf der Positionsmessung eine Detektion erfolgt
• einer Endlage, insbesondere der Offenposition (O) und/oder Schliessposition (G), des Ventilverschlusses (4) und/oder des wenigstens einen Verstellelements (5) und/oder
• eines allfälligen Aufpralls der Dichtflächen (3, 6) aufeinander im Rahmen der Verstellbewegung (Bv, Bh, Br) und/oder
• eines allfälligen Haftens der Dichtflächen (3, 6) aneinander.

15. Computerprogrammprodukt mit Programmcode, der auf einem maschinenlesbaren Träger, insbesondere einer Steuer- und Verarbeitungseinheit eines Vakuumventils (1) nach Anspruch 1, gespeichert ist, oder Computer-Daten-Signal, verkörpert durch eine elektromagnetische Welle, zur Durchführung des Verfahrens nach Anspruch 11.
